# EUROPEAN PATENT SPECIFICATION

(11) **EP 0 493 114 B1**
(45) Date of publication and mention of the grant of the patent: **10.04.1996**
(21) Application number: 91312017.6
(22) Date of filing: 24.12.1991
(51) Int. Cl.: G11B 5/66, G11B 5/64, G11B 5/714

(54) **Magnetic recording medium**
Magnetischer Aufzeichnungsträger
Support d'enregistrement magnétique

(30) Priority: 28.12.1990 JP 417542/90
(43) Date of publication of application: 01.07.1992
(73) Proprietor: KONICA CORPORATION, Tokyo 160 (JP)
(72) Inventor: Sasaki, Kunitsuna, Hino-shi, Tokyo (JP); Goto, Narita, Hino-shi, Tokyo (JP); Takeda, Katsuyuki, Hino-shi, Tokyo (JP); Sekiguchi, Nobuyuki, Hino-shi, Tokyo (JP); Takahashi, Hideki, Hino-shi, Tokyo (JP); Isobe, Ryousuke, Hino-shi, Tokyo (JP); Mori, Takahiro, Hino-shi, Tokyo (JP)
(74) Representative: Ellis-Jones, Patrick George Armine

(56) References cited:
- US-A- 4 851 289
- PATENT ABSTRACTS OF JAPAN vol. 14, no. 191 (P-1038)18 April 1990
- PATENT ABSTRACTS OF JAPAN vol. 14, no. 561 (P-1142)13 December 1990
- PATENT ABSTRACTS OF JAPAN vol. 13, no. 16 (E-703)13 January 1989

## Description

### FIELD OF THE INVENTION

This invention relates to a magnetic recording medium such as a magnetic tape, a magnetic sheet and a magnetic disk.

### BACKGROUND OF THE INVENTION

A magnetic recording medium such as a magnetic tape is generally prepared by coating a magnetic paint comprising a magnetic powder and a binder resin over a support and then by drying the resulting coated support.

In recent years, for the purpose of improving the characteristics of a magnetic recording medium, it has been known to divide a magnetic layer into a plurality of layers and to include a ferromagnetic metal powder in the outermost layer thereof and Co-γ-FeOx in the layers other than the outermost layer thereof. [Refer to Japanese Patent Publication Open to Public Inspection (hereinafter referred to as JP OPI Publication) No. 64-19524/1989.]

When including Co-γ-FeOx in the layers other than the outermost layer as mentioned above, the RF output and lumi S/N thereof are equivalent to those of a magnetic layer comprising only a single layer containing ferromagnetic metal powder and the chroma output and chroma S/N thereof are further improved, as compared the above-mentioned two kinds of layers to each other, because Co-γ-FeOx is normally lower in Hc than that of ferromagnetic metal powder. In addition to the above, Co-γ-FeOx is more inexpensive than ferromagnetic metal powder, so that the production cost thereof may also be saved.

There is also a short-wave recording tendency in a recording system in which ferromagnetic metal powder is used, such as the recently developed Hi-Fi 8mm video systems. Accordingly, in the ferromagnetic metal powder which is applicable to the outermost layer and contributable to a short-wave recording operation, it has become popular to use those having a substantially shorter average major axis length such as 0.25 µm (i.e., 250 nm) as seen in JP OPI Publication No. 64-19524/1989.

However, even in the technique disclosed in the above-given JP OPI Publication No. 64-19524/1989, the resulting electromagnetic conversion characteristics including, particularly, the RF output and lumi S/N have not been satisfactory.

US-A-4 851 289 discloses a magnetic recording medium comprising a non-magnetic support having provided thereon plural magnetic layers containing ferromagnetic particles and binders, wherein the ferromagnetic particles contained in the uppermost magnetic layer have an average long axis length of less than 250 nm and a crystal size measured by an X-ray diffractiometry of less than 30 nm.

### SUMMARY OF THE INVENTION

It is an object of the invention to provide a magnetic recording medium satisfactory in electromagnetic characteristics throughout the whole wavelength region from the shortwave side to the longwave side and improved on the electromagnetic alignment property of the magnetic metal powder applied to the outermost layer so that the RF output and lumi S/N thereof can also be improved.

### BRIEF DESCRIPTION OF THE DRAWINGS

Fig. 1 is a cross-sectional view illustrating an example of multilayered magnetic tapes;
Fig. 2 shows another example of the magnetic recording media;
Fig. 3 shows an example of the apparatuses for preparing magnetic recording media.

Description of the reference numerals:
- 1 .....: Support;
- 2 .....: Magnetic layer (the lower layer)
- 3 .....: Backcoat layer
- 4,6, ..: Magnetic layer (the upper layer)
- 5 .....: Magnetic layer (intermediate)

### DETAILED DESCRIPTION OF THE INVENTION

In other words, the invention relates to a magnetic recording medium comprising a non-magnetic support provided with a plurality of magnetic layers laminated thereon, wherein the outermost layer out of the magnetic layers contains a magnetic metal powder of the Fe-Al type having an average major axis length of less than 250 nm and the ratio of the average major axis length to an average crystallite size (the average major axis length/an average crystallite size) of less than 12.

The media of the invention are comprised of a plurality of magnetic layers as the magnetic layer thereof. It is, therefore, allowed to form each of the layers so that the high frequency recording and playback characteristics of video outputs, for example, can be improved on the outermost layer side and the relatively lower frequency recording and playback characteristics of chroma or audio outputs, for example, can also be improved on the side of the lower layer. It is generally required to embody the above-mentioned constitution in the following manner. A coercive force (Hc) of the side on which the outermost layer is arranged (including particularly the side of the outermost layer itself) is to be made greater than that of the lower layer side and the layer thickness of the outermost layer is to be substantially thin. It is also desirable that the layer thickness of the outermost layer is to be not thicker than 1 µm and, particularly, not thicker than 0.6 µm. It is further desirable that the layer thickness of the lower layer adjacent to the outermost layer is to be within the range of 1.5 to 4.0 µm.

JP OPI Publication No. 64-19524/1989 discloses that the average major axis length and average crystallite size of the ferromagnetic metal powder applied to the outermost layer are to be shorter than 0.25 µm and smaller than 200 Å, respectively. However, when checking up the example of the ratio of the former to the latter, (i.e., the ratio of the average major axis length to the average crystallite size), it was found to be not less than 12.

This JP OPI Publication notes that the magnetic alignment of magnetic particles is deteriorated in preparing a magnetic recording medium when the axis ratio of magnetic powder is decreased.

However, the present inventors have found that, when orientating a 3000 Gauss magnetic field (especially in a drying zone) after coating a magnetic paint, the longitudinal orientation of ferromagnetic metal powder cannot be deteriorated even when the ratio of (a longitudinal length/a crystallite size) is less than 12.

Further when ferromagnetic metal powder has a ratio of (a longitudinal length/a crystallite size) of less than 10, the orientation thereof in the vertical direction can be excellent, as compared to that of ferromagnetic metal powder having a ratio of (a longitudinal length/a crystallite size) of not less than 10.

A luminance signal is recorded in a short wavelength region. It is, therefore, desirable to record the surface layer portions of a medium such as a tape vertically. In this connection, when containing ferromagnetic metal powder having a ratio (of a major axis length/a crystallite size) of less than 12 and, particularly, less than 10 in the upper layer of a magnetic layer, the luminance-signal output and S/N thereof can be improved.

The average major axis length of the above-mentioned ferromagnetic metal powder is less than 250 nm, because the modulation noise and so forth may become serious if the average major axis length thereof is not less than 250 nm.

In the invention, the above-mentioned term, 'an average major axis length', means an average value obtained when measuring the major axes of 100 pieces of magnetic powder particles through a transmission type electron microscope. The above-mentioned term, 'an average crystallite size', means an average value obtained by measuring 100 pieces of particles by an X-ray diffraction method, and the average value thereby obtained corresponds to the average value of the minor axes of the same particles.

The above-mentioned average major axis length and average crystallite size may be obtained by controlling the preparation conditions (including, for example, reduction time) which are to be applied when metal magnetic powder is prepared.

The coercive force of the outermost layer of the magnetic recording medium according to the invention is suitably more than 1600 Oe, preferably more than 1700 Oe, more preferably more than 1700 Oe and not more than 2200 Oe.

From the viewpoints of cost saving and preparing a magnetic paint, it is preferable for the media of the invention that at least one layer of the lower magnetic layers of a medium contains cobalt and magnetic powder comprising iron oxide represented by FeOx (in which a relation of 1.33 < x ≤ 1.5 is to be effective).

In the invention, a plurality of layers each constituting a magnetic layer are preferably adjacent to each other, provided, there may be some instances where an apparent boundary having a specific thickness may substantially be made present between each of the above-mentioned layers so that both of the magnetic powder of the two layers may be mixed together and, in this instance, each of the above-mentioned the layers is to be regarded as the upper or lower layer from which the above-mentioned boundaries are excluded.

The media of the invention are particularly suitable for the case where each magnetic layer is coated in a simultaneously multilayered wet-on-wet coating method. It is a matter of course to apply a wet-on dry method in which the upper layer is to be coated after the lower layer is dried.

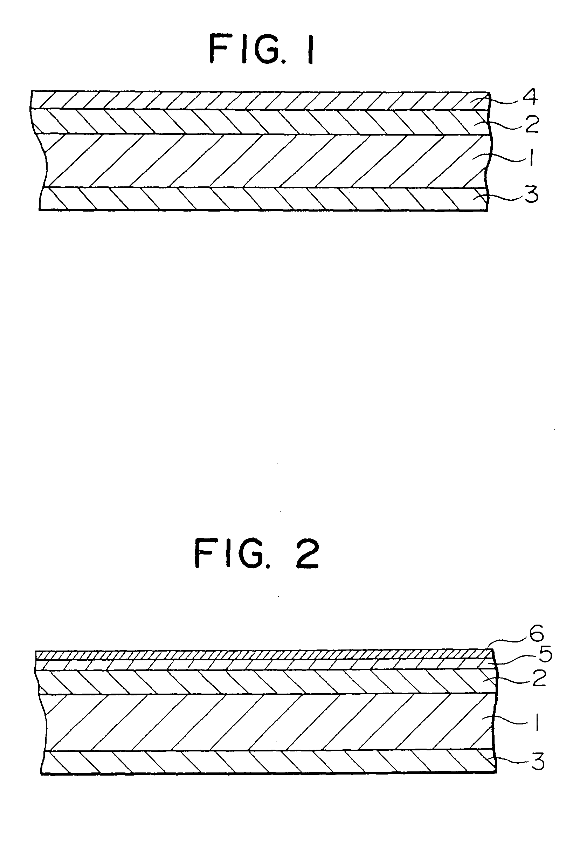

As shown in Fig.1, for example, the magnetic recording media of the invention are each prepared by laminating the first magnetic layer 2 and the second magnetic layer 4 in this order over a non-magnetic support 1 such as that comprising polyethylene. In addition to the above, a backcoat layer 3 is provided over to the support surface opposite to the support surface laminated with the layers 2 and 4, however, the backcoat layer 3 may not necessarily be provided thereon. It is also allowed to provide an overcoat layer over the second magnetic layer 4. In the example shown in Fig. 4, the upper layer was divided into two layers 5 and 6.

In the magnetic recording media shown each in Figs. 1 and 2, it is preferable that the first magnetic layer 2 is to have a thickness within the range of 1.5 to 4.0 µm and that the second magnetic laye 4 or both of the second and third magnetic layers 5 and 6 are to have a total thickness of not less than 0.1 µm (e.g., 0.3 µm). In the outermost magnetic layers 4 and 6 and the other magnetic layers 2 and 5 (and/or 2), the former layers are to be regarded as the outermost layer and the latter layers 2 and 5 or 5 and 2, as the lower layers, according to the invention.

Among the above-mentioned magnetic layers 2, 4, 5 and 6, layers 4 and 6 (and, additionally, 5) each contain the foregoing magnetic metal powder relating to the invention (having an average major axis length of less than 250 nm and an average major axis length / an average crystallite size ratio < 12).

The magnetic recording medium of the invention comprises magnetic metal powder of the Fe-Al type.

The above-mentioned magnetic metal powder includes, for example, ferromagnetic powder comprising Fe-Al such, as those of Fe-Al type, Fe-Al-Ca type, Fe-Al-Ni type, Fe-Al-Zn type, Fe-Al-Co type, Fe-Ni-Al type, Fe-Ni-Si-Al-Mn type, Fe-Ni-Si-Al-Zn type and Fe-Al-Si type. The magnetic metal powder may also contain elements such as Cu and Cr and compounds thereof as additives.

Among the magnetic metal powder mentioned above, Fe type metal powder is has excellent electric characteristics and the following Fe type magnetic powders are particularly preferable in antiabrasion and dispersion properties; namely, those of Fe-Al type, Fe-Al-Ca type, Fe-Al-Ni type, Fe-Al-Zn type, Fe-Al-Co type, Fe-Ni type, Fe-Ni-Al type, Fe-Ni-Zn type, Fe-Ni-Al-Si-Zn type, Fe-Ni-Al-Si-Mn type and Fe-Ni-Co type.

In addition, the preferred ferromagnetic metal powders among those mentioned above, have such a structure that the proportion of Fe atoms to Al atoms each contained in the ferromagnetic metal powder is to be Fe : Al = 100 : 1 to 100 : 20 in terms of the atom number ratio, and that a proportion of Fe atoms to Al atoms each made present on the surface region having an analytical depth of not deeper than 100Å measured in ESCA of the ferromagnetic metal power is to be Fe : Al = 30 : 70 to 70 : 30 in terms of atom number ratio. Or, alternatively, preferred ferromagnetic metal powders contain Ni atom and Si atom in addition to Fe atom and Al atom. Another preferred ferromagnetic metal powder comprises Fe atom, Al atom, Ni atom and Si atom and at least either one of Zn atom and Mn atom is also contained therein, the Fe atom content thereof is not less than 90 atom %, the Ni atom content thereof is within the range of not less than 1 atom % to less than 10 atom %, the Al atom content thereof is within the range of not less than 0.1 atom % to less than 5 atom %, the Si atom content thereof is within the range of not less than 0.1 atom % to less than 5 atom % and the Zn atom content thereof and/or the Mn atom content thereof are within the range of not less than 0.1 atom % to less than 5 atom % (provided, the contents thereof means the total contents thereof when both of the Zn and Mn atoms are contained therein.) and a proportion among the Fe atom, Ni atom, Al atom, Si atom, Zn atom and/or Mn atom each made present in the surface region of the ferromagnetic metal powder having an analytical depth of not deeper than 100i measured in ESCA of the ferromagnetic metal powder is Fe : Ni : Al : Si:(Zn and/or Mn) = 100 : (not more than 4) : (10 to 60) : (10 to 70) : (20 to 80).

The examples of the magnetic powder applicable to the above-mentioned magnetic layer 2 or 5 include a magnetic oxide such as α-Fe₂O₃, Co-containing γ-Fe₂O₃, Co-adhered γ-Fe₂O₃, Fe₃O₄, Co-containing Fe₃O₄, Co-adhered Fe₃O₄, Co-containing magnetic FeOx (in which 1.33 < x ≤ 1.5) and CrO₂, a hexagonal ferrite such as barium ferrite and iron nitride. Among the magnetic powder given above, Co-containing FeOx (in which 1.33 < x ≤ 1.5) is preferable.

Each of the magnetic layers is also allowed to contain a dispersant (such as powdered lecithin), a lubricant [such as silicone oil, graphite, molybdenum disulfide, tungsten disulfide, a monobasic aliphatic acid having 12 to 20 carbon atoms (such as stearic acid) and an aliphatic acid ester having 13 to 40 carbon atoms], an abrasive (such as alumina) and an antistatic agent (such as carbon black and graphite).

The binders applicable to a magnetic layer such as 2, 4, 5 and 6 include, preferably, binders each having an average molecular weight within the range of 10000 to 200000. They may be exemplified by, for example, a vinyl chloride-vinyl acetate copolymer, a vinyl chloride-vinylidene chloride copolymer, a vinyl chloride-acrylonitrile copolymer, polyvinyl chloride, urethane resin, a butadiene-acrylonitrile copolymer, polyamide resin, polyvinyl butylal, a cellulose derivative (such as cellulose acetate butylate and cellulose diacetate), a styrene-butadiene copolymer, polyester resin, various kinds of synthetic rubbers, phenol resin, epoxy resin, urea resin, melamine resin, phenoxy resin, silicone resin, an acrylic type reactive resin, a mixture of a high molecular weight polyester resin and an isocyanate prepolymer, a mixture of a polyester polyol and a polyisocyanate, urea formaldehyde resin, a mixture of a low molecular weight glycol / a high molecular weight diol / an isocyanate, and the mixtures thereof.

The above-given binders may preferably be a resin containing such a hydrophilic polar group as -SO₃M, -COOM and -PO(OM′)₂, (in which M represents a hydrogen atom or an alkali metal such as lithium, potassium and sodium, and M′ represents a hydrogen atom, an alkali metal such as lithium, potassium and sodium, or a hydrocarbon residual group). To be more concrete, the above-mentioned resins are improved in the affinity to magnetic powder by the above-mentioned intramolecular polar group. The improved affinity can further improve the dispersibility of the magnetic powder and any magnetic powder can be prevented from cohering together, so that the stability of a coating solution can further be improved and in its turn the durability of a medium can also be improved.

The above-mentioned binders including particularly a vinyl chloride type copolymer can be prepared by copolymerizing a vinyl chloride monomer, a copolymerizable monomer containing the alkali salt of sulfonic acid or phosphoric acid and, if required, other copolymerizable monomers. The above-mentioned copolymers can be vinyl-synthesized, therefore, they can readily be synthesized. The optimum characteristics thereof can also be controlled, because various copolymer components can freely be selected.

When providing backcoat layer 3 to a medium, non-magnetic particles such as those of barium sulfate are contained in the above-mentioned binder and they are coated over the rear surface of the support.of the medium.

The materials applicable to the above-mentioned support 1 include, for example, plastics such as polyethylene terephthalate and polypropylene, metals such as Al and Zn, glass, BN, Si-carbide, and ceramics such as porcelain and earthenware.

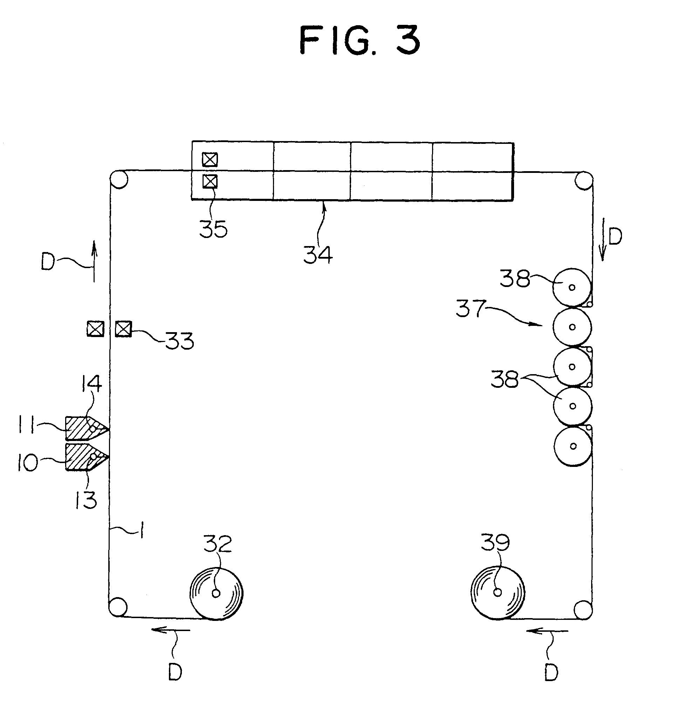

An example of apparatus for preparing the above-described media is shown in Fig. 3.

When preparing the medium shown in Fig.1 in this exemplified apparatus, film-shaped support 1 having been drawn out of supply roll 32 is coated with each of the paints for the above-mentioned magnetic layers 2 and 4 by making use of extrusion coaters 10 and 11. After that, the coated support 1 is oriented by fore-staged orientation magnets 33 having 2000 Gauss for example and is then introduced into dryer 34 arranged with back-staged orientation magnets 35 having 2000 Gauss for example, so that the support is dried by blowing hot air from a pair of nozzles arranged to the upper and lower sides of the dryer 34.

Next, the dried support 1 coated thereon with each of the magnetic layers is introduced into super-calender apparatus 37 comprising a combination of calendering rolls 38 and is then calendered there. After that, the calendered support 1 is taken up round take-up roll 39. It is allowed that each of the paints may be supplied to extrusion coaters 10 and 11 through an in-line mixer not shown. In the figure, arrow mark D indicates the direction of transporting a non-magnetic base-film.

Extrusion coaters 10 and 11 are each provided with liquid reservoirs 13 and 14 and the paints are superposed from each of the coaters in a wet-on-wet method. A medium shown in Fig. 2 may be prepared by adding a further extrusion coater as shown in Fig. 3.

### EXAMPLES

The preferable examples of the invention will now be detailed.

The components, proportions or rates and operational orders given below can variously be changed, provided any embodiments shall not depart from the spirit or essential characteristics of the invention Further, in the following examples, the term, 'a part' or 'parts', means 'a part' or 'parts' by weight.

### EXAMPLE 1

A magnetic paint for the upper layer was prepared by kneading and dispersing the following magnetic composition for the upper layer use.

### <Magnetic composition for the upper layer use>

| | |
|---|---|
| Fe-Al type magnetic metal powder, (having an average major axis length: 220 nm, an X-ray measured particle size (in an average crystallite size: 20 nm) and (Hc: 1600 Oe, δs: 120 emu/g) | 100 parts |
| Vinyl chloride resin containing potassium sulfonate, (MR-110 manufactured by Nippon Zeon Co.) | 10 parts |
| Polyurethane containing sodium sulfonate, (UR-8700 manufactured by Toyobo Corp.) | 5 parts |
| Alumina (having an average particle size: 0.6 µm) | 5 parts |
| Carbon black (having an average particle size: 30mµ) | 1 part |
| Myristic acid | 1 part |
| Stearic acid | 1 part |
| Butyl stearate | 1 part |
| Cyclohexanone | 100 parts |
| Methyl ethyl ketone | 100 parts |
| Toluene | 100 parts |

### <Magnetic composition for the lower layer use>

A magnetic paint for the lower layer use was prepared in the same manner as in the above-described magnetic composition for the upper layer use, so as to have the same composition as that of the above-described magnetic composition for the upper layer use, except that Co-γ-Fe₂O₃ (having an Hc of 800 Oe and an average major axis length of 300 nm) was used in place of the above-mentioned ferromagnetic metal powder.

Then, a magnetic layer comprising the lower layer having a layer thickness of 2.7 µm and the upper layer having a layer thickness of 0.3 µm was formed in the following manner. The resulting magnetic paints for the lower layer and for the upper layer were each added therein with 3 parts of polyisocyanate (Colonate-L manufactured by Japan Urethane Co.) and each of the resulting lower layer paint and upper layer paint were coated in this order over a 7.5µm-thick polyethyleneterephthalate film support in the wet-on-wet method shown in Fig. 3. Next, the magnetic field of the resulting coated support was oriented at 3000 Gauss while the coated layer remained undried. After it was dried, it was surface-smoothened with a calender, so that the magnetic layer could be prepared.

Further, a 0.8µm-thick backcoat layer was formed thereon by coating a backcoat layer paint having the following composition onto the above-mentioned polyethyleneterephthalate film surface opposite to the magnetic layer.

### <Composition of the paint for the backcoat layer use>

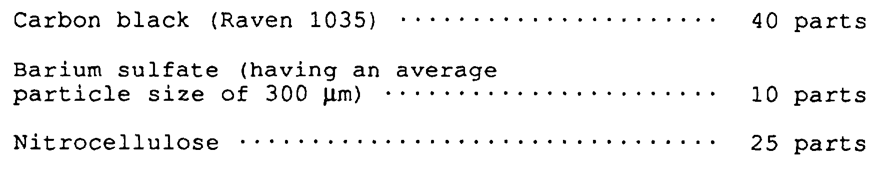

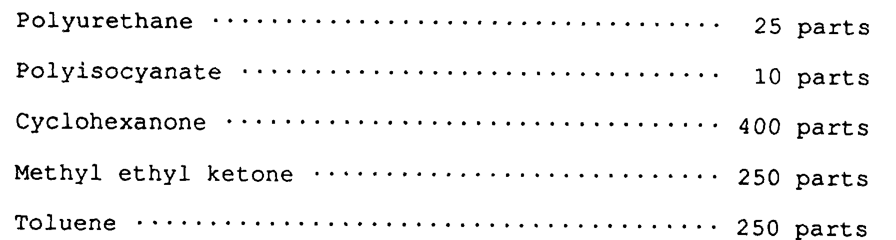

After curing the resulting master roll at 60°C, it was slit apart into 8mm video-tapes.

### EXAMPLES 2 ∼ 15 and COMPARATIVE EXAMPLES 1 ∼ 12

Video tapes were each prepared in the same manner as in the above-given example 1, except that the characteristics of the ferromagnetic metal powder contained in the magnetic compositions for the upper layer, the thicknesses of the upper and lower layers and the orientation intensities of the magnetic field were each changed as shown in Tables 1 and 2, provided, comparative examples 9 and 10 each shows the cases where no lower magnetic layers were provided, comparative example 11 shows the case where no upper magnetic layer was provided and comparative example 12 show the case where Co-γ-Fe₂O₃ was used for the magnetic powder contained in the upper magnetic layer.

The characteristics of the resulting video tapes were measured in the following manner. The results thereof are shown in Table 1.

### Sqx (Longitudinal squareness ratio):

A ratio of a residual magnetic flux density to a saturated magnetic flux density in the longitudinal direction of a subject tape (without any correction), which was measured by a VSM (Model VSM-3S manufactured by Toei Industrial Co.)

### Sqz (Vertical squareness ratio):

A ratio of a residual magnetic flux density to a saturated magnetic flux density in the vertical direction of a subject tape (without any correction), which was measured by a VSM.

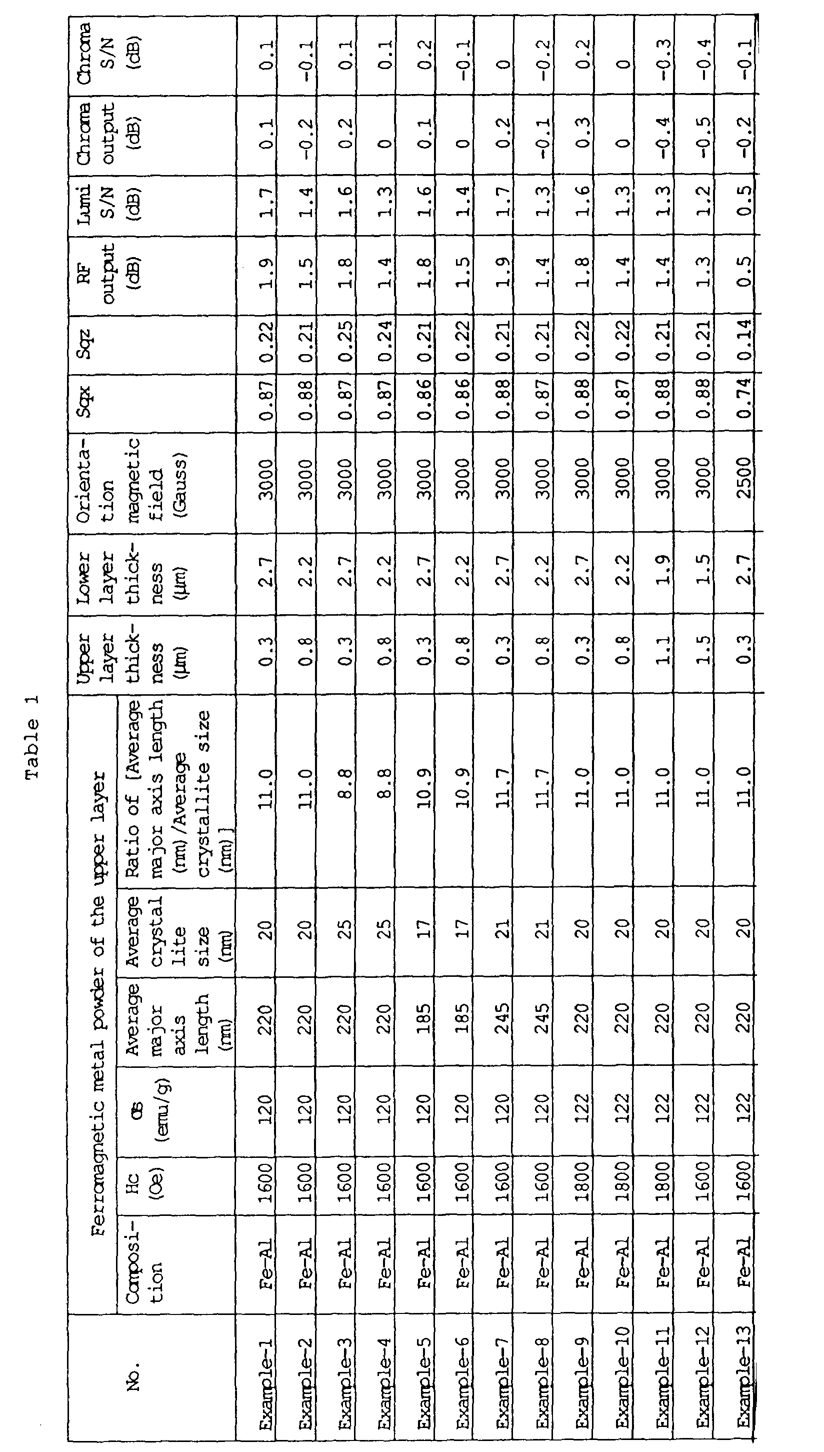

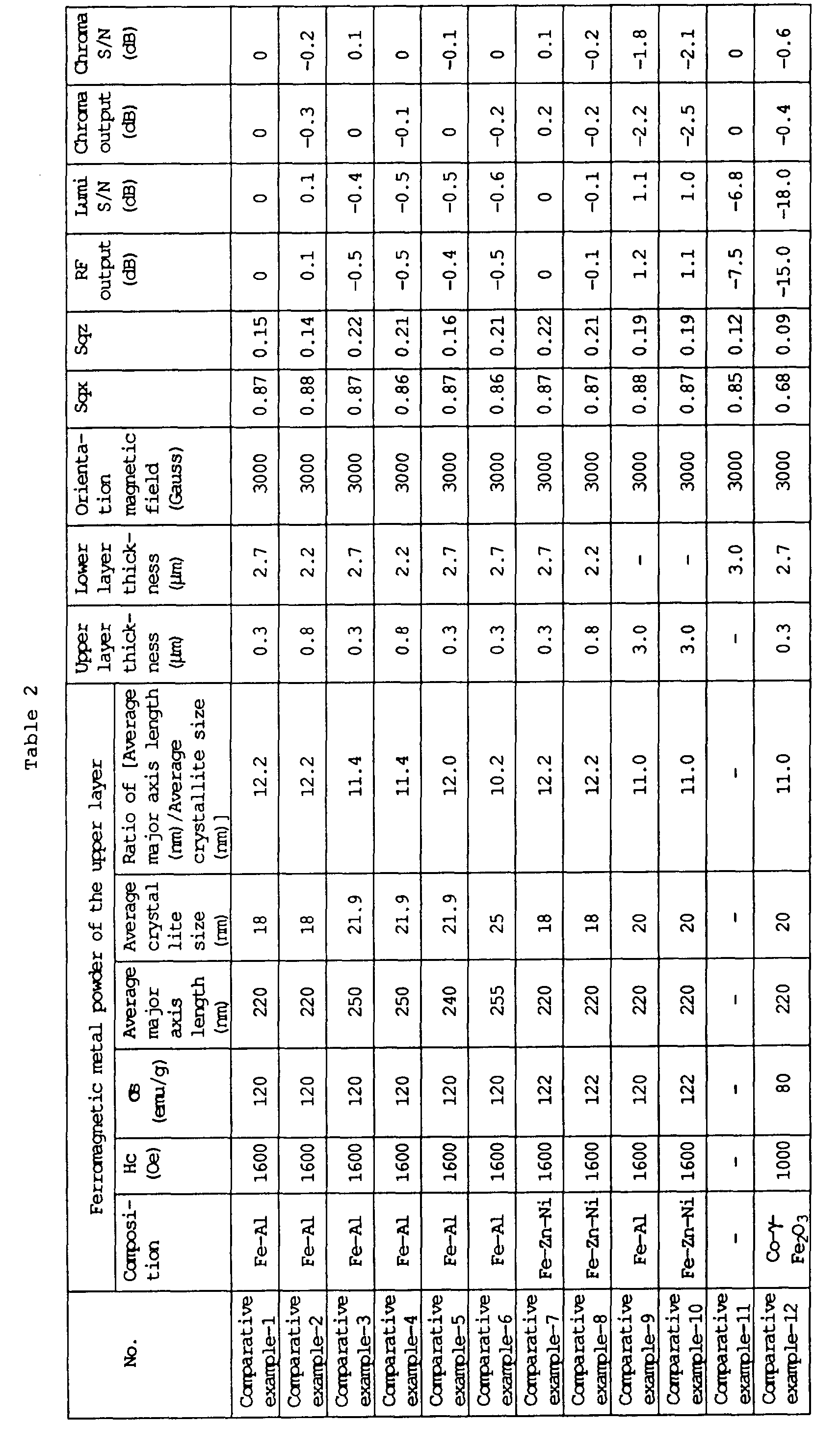

## Claims

1. A magnetic recording medium comprising:
a non-magnetic support provided thereon a plurality of layers including an outermost layer, wherein the outermost layer contains a magnetic metal powder of the Fe-Al type having an average major axis length of less than 250 nm and a ratio of the average major axis length divided by average crystallite size measured by X-ray diffractiometry of less than 12.

2. The magnetic recording medium of claim 1 wherein at least one layer other than the outermost layer comprises a magnetic powder containing Cobalt and FeOₓ satisfying an equation of 1.33 < X ≤ 1.5.

3. The magnetic recording medium of claim 1 wherein a thickness of the outermost layer is not more than 1 µm.

4. The magnetic recording medium of claim 2 wherein a coercive force of the outermost layer is more than 1600 Oe.

5. The magnetic recording medium of claim 4 wherein the coercive force of the outermost layer is more than 1700 Oe.

6. The magnetic recording medium of claim 5 wherein the coercive force of the outermost layer is more than 1700 Oe and not more than 2200 Oe.

## Patentansprüche

1. Magnetisches Aufzeichnungsmaterial, umfassend einen nichtmagnetischen Schichtträger mit einer Mehrzahl von darauf aufgetragenen Lagen einschließlich einer äußersten bzw. obersten Lage, wobei die äußerste Lage ein magnetisches Metallpulver vom Fe-Al-Typ einer durchschnittlichen Hauptachsenlänge von weniger als 250 nm und eines Verhältnisses durchschnittliche Hauptachsenlänge/durchschnittliche Kristallitgröße, bestimmt durch Röntgenstrahlenbeugung, von weniger als 12 aufweist.

2. Magnetisches Aufzeichnungsmaterial nach Anspruch 1, wobei mindestens eine von der äußersten Lage verschiedene Lage ein magnetisches Pulver mit Kobalt und FeOₓ entsprechend der Gleichung 1,33 < X ≤ 1,5 enthält.

3. Magnetisches Aufzeichnungsmaterial nach Anspruch 1, wobei die Dicke der äußersten Lage nicht mehr als 1 µm beträgt.

4. Magnetisches Aufzeichnungsmaterial nach Anspruch 2, wobei die Koerzitivkraft der äußersten Lage über 1600 Oe liegt.

5. Magnetisches Aufzeichnungsmaterial nach Anspruch 4, wobei die Koerzitivkraft der äußersten Lage über 1700 Oe liegt.

6. Magnetisches Aufzeichnungsmaterial nach Anspruch 5, wobie die Koerzitivkraft der äußersten Lage über 1700 Oe und nicht über 2200 Oe liegt.

## Revendications

1. Support d'enregistrement magnétique comprenant : un support non magnétique sur lequel est pourvue une pluralité de couches comprenant une couche la plus externe, la couche la plus externe contenant une poudre métallique magnétique du type Fe-Al ayant une longueur moyenne de grand axe inférieure à 250 nm et un rapport de la longueur moyenne de grand axe à la taille moyenne des cristallites, mesurée par diffractométrie aux rayons X, inférieur à 12.

2. Support d'enregistrement magnétique selon la revendication 1, dans lequel au moins une couche autre que la couche la plus externe comprend une poudre magnétique contenant du cobalt et FeOₓ qui satisfait à l'équation 1,33 < X ≤ 1,5.

3. Support d'enregistrement magnétique selon la revendication 1, dans lequel l'épaisseur de la couche la plus externe n'est pas supérieure à 1 µm.

4. Support d'enregistrement magnétique selon la revendication 2, dans lequel la force coercitive de la couche la plus externe est supérieure à 1600 Oe.

5. Support d'enregistrement magnétique selon la revendication 4, dans lequel la force coercitive de la couche la plus externe est supérieure à 1700 Oe.

6. Support d'enregistrement magnétique selon la revendication 5, dans lequel la force coercitive de la couche la plus externe est supérieure à 1700 Oe et n'est pas supérieure à 2200 Oe.
